# EUROPEAN PATENT SPECIFICATION

(11) **EP 2 253 876 B1**
(45) Date of publication and mention of the grant of the patent: **11.01.2017**
(21) Application number: 10460014.3
(22) Date of filing: 08.04.2010
(51) Int. Cl.: B29C 35/02, F16L 47/22, F16L 59/20, B29C 65/00, B29C 65/02, B29K 23/00, B29K 105/24

(54) **heatshrinkable sleeve manufacturing method**
Herstellungsmethode für eine Schrumpfmuffe
procedé de fabrication d'un manchon thermoretractable

(30) Priority: 17.04.2009 PL 38781809
(43) Date of publication of application: 24.11.2010
(73) Proprietor: Zaklad Produkcyjno Uslugowy Miedzyrzecz Polskie Rury Preizolowane SP. Z O.O., 66-300 Miedzyrzecz (PL)
(72) Inventor: Górczynski, Henryk, 66-300 Miedzyrzecz (PL); Górczynski, Dariusz, 66-300 Miedzyrzecz (PL)

(56) References cited:
- WO-A1-00/54960
- WO-A1-98/21517
- DE-U1- 9 208 024
- US-A- 3 465 529
- US-A- 4 070 044
- US-A1- 2001 041 235
- US-B1- 6 284 178

## Description

The subject of the invention is a method for the manufacture of a heat shrink sleeve made of cross-linked HDPE plastic, used in the construction of heat distribution networks, used in a pre-insulated pipe system.

### Current state of technology

Pre-insulated pipes used in the construction of external heat distribution networks placed directly in the ground and connected to each other in a known manner form a pre-insulated pipeline. In accordance with the known method the sleeve is placed in front of the connection on one of the ends of the pre-insulated pipe, without heat insulation and protective jacket, then the ends of the pipes or pre-insulated profiles are connected together by welding. After the ends of the pipes are connected the sleeve is moved over the place of connection and is heat-shrunk. The space created between the sleeve and the non-insulated pipe ends after they are connected by weld is filled with insulating foam through a filling opening placed in the sleeve. The ends of the sleeve are sealed by wrapping them with self-adhesive, heat-shrink tape. In the known solutions the internal part of the sleeve is covered with the glue for connecting with the protective jacket of the pre-insulated pipe. Also known are insulating splints, which are placed before the sleeve is placed over the weld. When the heat shrink sleeve is used, the ends of the sleeve may be shrunk over the heat insulation next to the weld.

Polish patent specification PL380355, corresponding to the patent publication PL205918B1, discloses a heat shrink muff which has the shape of a pipe profile from radiation cross-linked polyethylene, advantageously with a polygonal cross-section. This muff is characterized by the fact that the surface of the pipe profile around the insulating foaming agent filling opening is not cross-linked. On the profile wall at least one insulating foaming agent opening is located. It is advantageous when the pipe profile has on its ends the bells with a higher diameter, which facilitates the sliding of the muff over the external pipe of pre-insulation, from one and from the other side, and then the clamping of bells by heating over the pre-insulations jacket. The bell of the muff has a layer of sealant placed on a part of its inner surface.

The method of manufacture of the heat shrink muff in accordance with this prior art document is characterized by the fact, that before the polyethylene pipe profile is moved into the working space of the electron accelerator the area of the surface material used for every foaming agent filling opening is protected against the electron beam. The protection may be, for example, a covering of this zone with the opening with a screen, which absorbs the accelerator radiation. After the entire profile cools down to the ambient temperature the non-cross-linked surfaces are holed to form foaming agent filling openings. The non-cross-linked surface around the foaming agent filling openings enables the use of non cross-linked polyethylene plugs for plugging the opening, and connecting the plug with the opening, which ensures a hermetic connection which guarantees resistance against humidity penetrating into the muff.

According to the patent specification US 2001/041235 (TAILOR DILIP K [CA] ET. AL), a heat shrinkable component in the form of a pipe profile from cross-linked polyethylene, containing at least one opening for foaming agent filling for heat insulation, is known, being said that the pipe component is made by extrusion from polyethylene and then cross-linked, and has a non cross-linked surface around the openings for foaming agent filling.

The pipe sleeve is made from cross-linked plastic and the heat shrink sleeve is made of the plastic cross-linked to a smaller degree than the pipe sleeve. The heat shrink sleeve has a rounded shape, or circular one in other variety, and may contain a strip in elongated shape, placed along the sleeve axis on its outer surface, or on its internal surface in other variety. The methods for welding the heat shrink sleeves with the pipe sleeves can be similar to the methods employed at making the relatively not cross-linked component of the internal pipe, described under WO 98/21517. The heat shrink sleeves can be placed on the pipe sleeve before or after expansion; for example, they can be fused or welded with the pipe sleeve, however, if they are cross-linked, they can be bonded by means of a standard adhesive and then fused or welded with the sleeve.

### The essence of the invention

The goal of the solution presented in the invention is the creation of a heat shrink sleeve, in which the surface around the foaming agent filling openings will enable the joining of a weldable plug for the closing of the openings made of non cross-linked polyethylene, with the profile of the sleeve made of polyethylene through the process of extrusion, and then cross-linked using a silane method to PE-Xb.

The heat shrink sleeve created in accordance with the invention has the shape of a cylindrical section of a pipe profile made of silane method cross-linked polyethylene PE-Xb. The sleeve possess at least one foaming agent filling opening for providing the heat insulation at the place of the weld between the pre-insulated pipes. The removal of air from the system required more openings, advantageously two. The sleeve is characterized by the surface of the pipe profile around foaming agent filling openings being non-cross-linked. Such a non-cross-linked surface is obtained by welding in a patch from non-cross-linked polyethylene inside or outside of the pipe profile in the places where the foaming agent filling openings are located. The patch has a shape of a flat disc with a thickness of 2-8 mm and a diameter of two to several times that of the upper surface of the welded conical plug for closing the openings. The surface of the welded patch has the shape of the surface of the pipe profile in the place where it is welded.

The characteristic feature of the non-cross-linked polyethylene patch is the ability to be thermally connected by welding with a pipe profile made of silane method cross-linked polyethylene PE-Xb and easy hot connection with non-cross-linked polyethylene of the plug, which is used to close the openings after the sleeve is filled with foaming agent. The pipe profile is roughened mechanically at the ends of the internal side, in order to apply a layer of a hot melt glue or has an applied layer of glue for connection with the external cover of the pre-insulation layer of the pre-insulated heat distribution pipe. In another variety the heat shrink sleeve made of cross-linked polyethylene PE-Xb has a shape of the pipe section with a cross-section of a polygon.

The current invention is a method of manufacture of a heat shrink sleeve according to the method steps of claim 1. The method consists of a straight pipe section with a round cross-section, made through an extrusion process from silane method cross-linked polyethylene PE-Xb, being cut into sections with, advantageously an identical length of 50-70 cm, which form pipe profiles. Then the foaming agent filling openings, advantageously, a size of 20-50 mm are made in the pipe profile. The method of manufacture of a heat shrink sleeve in accordance with the invention is characterized by the pipe profile with openings being introduced into a device, in which at the melting temperature of the silane method cross-linked high density polyethylene PE-Xb the process of welding the patch of non-cross-linked polyethylene is conducted. Advantageously, the process of welding a flat disc consists of it being heated to a temperature of approximately 200°C in a heating furnace, while at the same time a device is used to heat a pipe profile to temperature of approximately 200°C. Advantageously, the non-cross-linked polyethylene disc heated to the required temperature is placed inside or outside of the pipe profile in the places where the foaming agent filling openings are found and by being hot pressed, for example by a hydraulic press, for a period of 2 to 5 minutes they are connected. After the patch is welded, the pipe profile is cooled down to ambient temperature. The ends of the pipe profile are machined, in order to ensure it is roughened , and then advantageously a layer of sealing got melt glue is placed on the surface, and protected against weather conditions and dirt, for example with a foil. The pipe profiles may have a polygonal cross-section.

### Advantageous features of the invention

The solution in accordance with the invention enables the obtaining of a non-cross-linked surface around the foaming agent filling openings in a pipe profile made of PE-Xb cross-linked polyethylene. The non-cross-linked surface in which the openings are made enables the use of non-cross-linked polyethylene weldable plugs to closed them after the sleeve is filled with foaming agent, as a result of easy bonding and connection between both non-cross-linked materials, The non-cross-linked surface is obtained through a process of welding a patch of non-cross-linked polyethylene which connects to a cross-liked polyethylene of the pipe profile.

### Example realizations

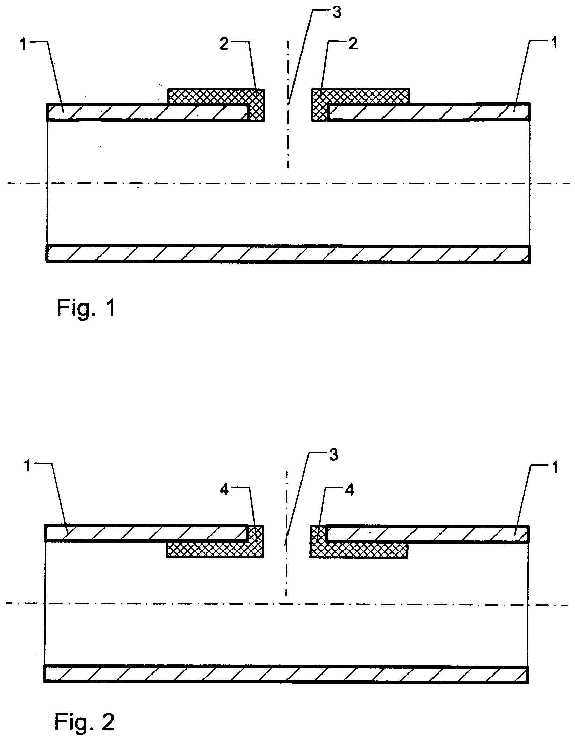

The subject of the invention was shown in an example realization on the attached drawing, where Fig. 1 presents a sleeve with a patch welded on the outside of the pipe profile, in a lengthwise cross-section, and Fig. 2 presents a sleeve with a patch welded on the inside of the pipe profile, in a lengthwise cross-section.

### 1^{st} Example

The method of manufacture of heat shrink sleeve consists of a straight pipe section with a round cross-section, made thought an extrusion process from polyethylene, which is then silane method cross-linked to PE-Xb, being cut into identical length pipe profiles (1) with a length of 60 cm. Then two foaming agent filling openings (3) with a diameter of 40 mm are made in the surface of the pipe profile. The method of manufacture of a heat shrink sleeve in accordance with the invention is characterized by the pipe profile (1) with openings (3) being introduced into a device, in which at the melting temperature of the silane method cross-linked polyethylene PE-Xb the process of welding a patch of non-cross-linked polyethylene, consisting of a flat disc with a thickness of 6 mm and a diameter of 70 mm, is conducted. The process of welding a patch in the shape of a flat disc made of non-cross-linked polyethylene consists of it being heated to a temperature of approximately 200°C in a heating furnace, while at the same time a device is used to heat a pipe profile (1) to a temperature of 200°C. The non-cross-linked polyethylene disc heated to the required temperature is placed on the outer surface of the pipe profile (1) in the places where the foaming agent filling openings (3) are found and by being pressed together with a hydraulic press for a period of 5 minutes, they are connected. After the patch is welded, the pipe profile (1) is cooled down to ambient temperature. The ends of the pipe profile (1) are machined on the inside, in order to ensure it is roughened. A layer of sealing hot melt glue is placed on the roughened surface, and protected with a foil.

In another example of manufacturing version the heat shrink sleeve made of a pipe profile (1) has a polygonal cross-section.

### 2^{nd} Example

The method of manufacture of a heat shrink sleeve consists of a straight pipe section with a round cross-section, made though an extrusion process from polyethylene, which is then silane method cross-linked to PE-Xb, being cut into identical length pipe profiles (1) with a length of 60 cm. Then two foaming agent filling openings (3) with a diameter of 40 mm are made in the surface of the pipe profile. The method of manufacture of a heat shrink sleeve in accordance with the invention is characterized by the pipe profile (1) with openings (3) being introduced into a device, in which at the melting temperature of the silane method cross-linked polyethylene PE-Xb the process of welding a patch of non-cross-linked polyethylene, consisting of a flat disc with a thickness of 6 mm and a diameter of 70 mm, is conducted. The process of welding a patch in the shape of a flat disc made of non-cross-linked polyethylene consists of it being heated to a temperature of approximately 200°C in a heating furnace, while at the same time a device is used to heat a pipe profile (1) to a temperature of 200°C. The non-cross-linked polyethylene disc heated to the required temperature is placed on the inner surface of the pipe profile (1) in the places where the foaming agent filling openings (3) are found and by being pressed together with a hydraulic press for a period of 5 minutes, they are connected. After the patch is welded, the pipe profile (1) is cooled down to ambient temperature. The ends of the pipe profile (1) are machined on the inside, in order to ensure it is roughened. A layer of sealing hot melt glue is placed on the roughened surface, and protected with a foil.

In another example of manufacturing version the heat shrink sleeve made of a pipe profile (1) has a polygonal cross-section.

## Claims

1. A method for the manufacture of a heat shrink sleeve consisting of a cross-linked polyethylene straight pipe section with a round cross-section being cut into identical length sections which forms profiles, then foaming agent filling openings are made, **characterized in that** the pipe profile (1) with a round cross-section is made through a process of extrusion from polyethylene, which is then silane method cross-linked to PE-Xb with openings (3) being introduced into a device in which at the temperature of approximately 200°C the process of welding a patch of non-cross-linked polyethylene in the shape of a flat disc is conducted and non-cross-linked surfaces of the pipe profile (1) around the openings (3) are obtained.

2. A method for the manufacture of a heat shrink sleeve in accordance with the claim 1, **characterized in that** the patch in the form of a flat disc made of non-cross-linked polyethylene is heated in a heating furnace to the temperature of approximately 200°C, and then placed outside the pipe profile (1) in the places where the openings (3) are located, in the device where its welding process is conducted and non-cross-linked surface (2) is obtained.

3. A method for the manufacture of a heat shrink sleeve in accordance with the claim 1, **characterized in that** the patch in the form of a flat disc made of non-cross-linked polyethylene is heated in a heating furnace to the temperature of approximately 200°C, and then placed inside the pipe profile (1) in the places where the openings (3) are located, in the device where its welding process is conducted and non-cross-linked surface (4) is obtained.

4. A method for the manufacture of a heat shrink sleeve in accordance with the claims 1 and 2 or claims 1 and 3, **characterized in that** the patch in the form of a flat disc made of non-cross-linked polyethylene has a thickness of 2-8 mm and a diameter of two to several times that of an upper surface of a conical welded plug for closing the openings (3).

## Patentansprüche

1. Eine Herstellungsmethode für Schrumpfmuffe beruhend auf dem Durchschneiden eines geraden Abschnittes eines Rohres aus vernetztem Polyethylen, mit rundem Querschnitt, auf Profile bildende Abschnitte mit der gleichen Länge und der abschließenden Ausführung von Öffnungen zum Befüllen mit einem schaumbildenden Mittel, **dadurch gekennzeichnet, dass** das Rohrprofil (1) mit einem runden Querschnitt unter Anwendung von dem Extrusionsprozess aus Polyethylen hergestellt wird, das nachfolgend samt den Öffnungen (3) der Silanvernetzung zum PE-Xb unterliegt und in eine Einrichtung eingeführt wird, wo in einer Temperatur von ca. 200°C ein Prozess zum Aufschweißen von einem Flicken aus nicht vernetztem Polyethylen in einer Form von flacher Scheibe durchgeführt wird, wodurch nicht vernetzte Flächenbereiche auf dem Rohrprofil (1) um die Öffnungen (3) herum entstehen.

2. Eine Herstellungsmethode für Schrumpfmuffe nach Anspruch 1, **dadurch gekennzeichnet, dass** der Flicken in Form einer flachen Scheibe aus nicht vernetztem Polyethylen in einem Wärmeofen bis einer Temperatur von ca. 200°C aufgewärmt, und danach auf der äußeren Oberfläche des Rohrprofils (1) an den Stellen, wo sich die Öffnungen (3) befinden, und in einer Einrichtung angebracht wird, wo der Schweißprozess durchgeführt und die nicht vernetzte Oberfläche (2) hergestellt wird.

3. Eine Herstellungsmethode für Schrumpfmuffe nach Anspruch 1, **dadurch gekennzeichnet, dass** der Flicken in Form einer flachen Scheibe aus nicht vernetztem Polyethylen in einem Wärmeofen bis einer Temperatur von ca. 200°C aufgewärmt, und danach auf der inneren Oberfläche des Rohrprofils (1) an den Stellen, wo sich die Öffnungen (3) befinden, und in einer Einrichtung angebracht wird, wo der Schweißprozess durchgeführt und die nicht vernetzte Oberfläche (4) hergestellt wird.

4. Eine Herstellungsmethode für Schrumpfmuffe nach Ansprüchen 1 und 2 oder nach Ansprüchen 1 und 3, **dadurch gekennzeichnet, dass** der Flicken in Form einer flachen Scheibe aus nicht vernetztem Polyethylen eine Stärke von 2 - 8 mm und einen Durchmesser hat, der zwei oder mehrmals größer als die innere Fläche des kegelförmigen, zum Verschließen der Öffnungen (3) aufgeschweißten Stopfens ist.

## Revendications

1. Procédé de fabrication de manchon thermorétractable, consistant en coupe de tuyau droit en polyéthylène réticulé, ayant une section transversale circulaire, en segments de longueur identique, qui forment les profils, ensuite la réalisation des ouvertures pour le remplissage d'un agent moussant, **caractérisé en ce que** le profil de tuyau (1) avec une section transversale circulaire est fabriquée en utilisant un procédé d'extrusion du polyéthylène, qui est ensuite réticulé par une méthode au silane PE-Xb avec des ouvertures (3) et il est introduit dans le dispositif, dans lequel a une température d'environ 200°C on effectue un procédé de soudure des pièces en polyéthylène non réticulé sous forme d'un disque plat et on obtient des surfaces non réticulées du profilé de tuyau (1) autour des ouvertures (3).

2. Procédé de fabrication de manchon thermorétractable selon la revendication 1, **caractérisé en ce que** la pièce sous forme d'un disque plat en polyéthylène non réticulé est chauffée dans un four de chauffage à une température d'environ 200°C, puis placée à l'extérieur du profilé de tuyau (1) en lieux où se trouvent les ouvertures (3), dans un dispositif, dans lequel le procédé de soudure est effectué et où la zone non réticulé est obtenue (2).

3. Procédé de fabrication de manchon thermorétractable selon la revendication 1, **caractérisé en ce que** la pièce sous la forme d'un disque plat en polyéthylène non réticulé est chauffée dans un four de chauffage à une température d'environ 200°C, puis placée à l'intérieur du profil du tuyau (1) en lieux où se trouvent les ouvertures (3), dans un appareil dans lequel le procédé est effectué et la zone de soudage est obtenue réticulée (4).

4. Procédé de fabrication de manchon thermorétractable selon les revendications 1 et 2 ou les revendications 1 et 3, **caractérisé en ce que** la pièce sous la forme d'un disque plat en polyéthylène non réticulé ayant une épaisseur de 2-8 mm et un diamètre de deux à plusieurs fois plus grande que la surface conique interne du bouchon soudé pour fermer les ouvertures (3).
